# EUROPEAN PATENT APPLICATION

(11) **EP 2 009 065 A1**
(43) Date of publication of application: **31.12.2008**
(21) Application number: 08252053.7
(22) Date of filing: 13.06.2008
(51) Int. Cl.: C09B 62/503, D06P 1/384

(54) **Reactive dyestuffs with alkylthio group and beta-sulfatoethylsulfone group**

(30) Priority: 29.06.2007 CN 200710123519
(71) Applicant: Everlight USA, Inc., Pineville, NC 26134 (US)
(72) Inventor: Chen, Wen-Jang, Taoyuan Hsien, Taiwan (CN); Huang, Hong-Chang, Taoyuan Hsien, Taiwan (CN); Phillips, Duncan, A.S., Manchester M60 1QD (GB); Taylor, John, A., Manchester M60 1QD (GB)
(74) Representative: Tranter, Andrew David

(57) **Abstract**

The present invention provides a reactive dyestuff with an alkylthio group and a β-sulfatoethylsulfone group, which is represented by formula (I), 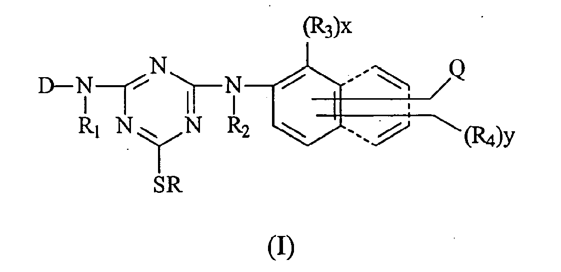 wherein D, R, R₁, R₂, R₃, R₄, Q, x, and y are defined the same as the specification. The reactive dyestuffs of the present invention not only have characteristics of high solubility, high alkali solubility, and easily being washed off for dyeing cellulose fiber, but also are suitably applied in cold-pad-batch dyeing, continuous-dyeing, printing, and digital printing.

## Description

### BACKGROUND OF THE INVENTION

### 1. Field of the Invention

The present invention relates to a novel reactive dyestuff and, more particularly, to a reactive dyestuff with an alkylthio group and a β-sulfatoethylsulfone group, which is suitably used for dyeing hydroxyl-containing and/or carboxamido-containing materials, applied in cold-pad-batch dyeing, continuous-dyeing, printing, and digital printing.

### 2. Description of Related Art

Reactive dyestuffs, with two reactive groups of monochloro triazine and β-sulfatoethylsulfone, as the formula (A) disclosed in US Patent No. 4720542 and the formula (B) disclosed in JP Patent No. 57141455 exhibit inferior alkali-resistant solubility due to the structure thereof. Therefore, they can not be applied in cold-pad-batch dyeing or continuous-dyeing.

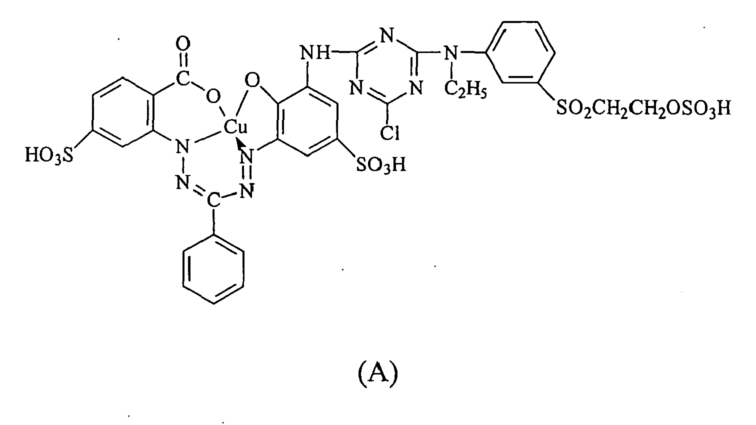

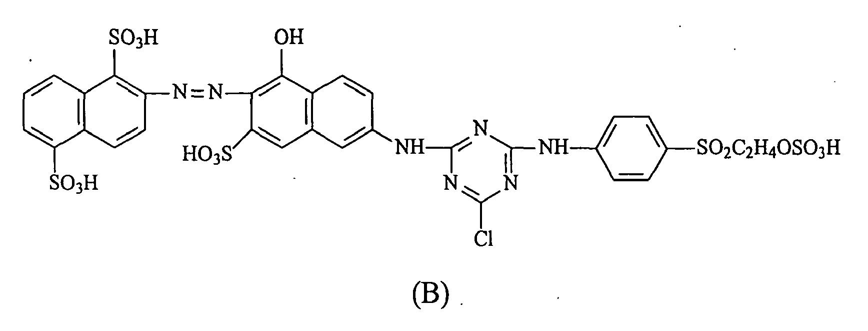

### SUMMARY OF THE INVENTION

The present invention provides a novel reactive dyestuff with an alkylthio group and a β-sulfatoethylsulfone group. The reactive dyestuff of the present invention has characteristics of high solubility, high alkali solubility, and easily being washed off for dyeing cellulose fiber. It is suitably applied in cold-pad-batch dyeing, continuous-dyeing, printing, and digital printing.

The present invention provides a reactive dyestuff with an alkylthio group and a β-sulfatoethylsulfone group represented by the following formula (I), 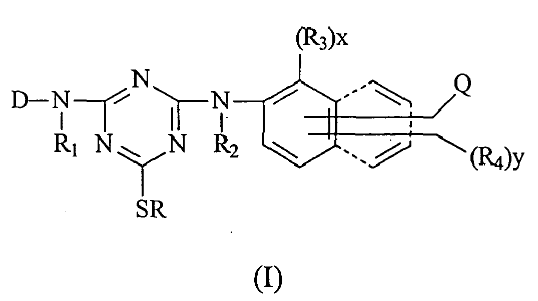 wherein
D is a chromophoric radical having one or more sulfo groups;
R is C₁₋₄ alkyl, which is non-substituted or substituted by one or more substituents, said substituents are selected from the group consisting of halogens, hydroxyl, sulfo, cyano, amino, carbonamido, carboxyl, alkoxycarbonyl, acyloxy, and alkoxy;
R₁ and R₂ each independently is hydrogen, or C₁₋₄ alkyl, which is non-substituted or substituted by one or more substituents, said substituents are selected from the group consisting of halogens, hydroxyl, cyano, C₁₋₄ alkoxy, C₁₋₄ alkoxycarbonyl, carboxyl, and sulfo;
R₃ and R₄ each independently is hydrogen, sulfo, C₁₋₄ alkyl, or C₁₋₄ alkoxy;
Q is -B-SO₂CH₂CH₂W, -B-SO₂CH=CH₂, -SO₂CH₂CH₂W, or -SO₂CH=CH₂;
B is -CONH-(CH₂)ᵢ-, or -O-(CH₂)ⱼ-CONH-(CH₂)ₖ-;
i, j, and k each independently is 1, 2, 3, 4, 5, or 6;
W is -Cl, -OSO₃H, 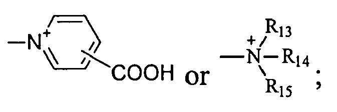
R₁₃, R₁₄, and R₁₅ each independently is C₁₋₄ alkyl; and
x and y each independently is 0 or 1.

In the reactive dyestuff of the formula (I) of the present invention, R is preferably methyl or ethyl. The above-mentioned alkyl radicals can be further substituted by one to three substituents selected from the group consisting of hydroxyl, sulfo, cyano, amino, carbonamido, carboxyl, alkoxycarbonyl, acyloxy, and alkoxy.

R₁ and R₂ each independently is preferably methyl or ethyl optionally substituted by one or more substituents which are selected from the group consisting of hydroxyl, cyano, C₁₋₄ alkoxy, C₁₋₄ alkoxycarbonyl, carboxyl, and sulfo.

Preferred chromophoric radicals (D) of the reactive dyestuff represented by the formula (I) are formazan, monoazo, disazo, polyazo, metal complex azo, anthraquinone, triphendioxazine, or phthalocyanine.

In the reactive dyestuff according to the formula (I), D can be the formazan radical represented by the following formulas: 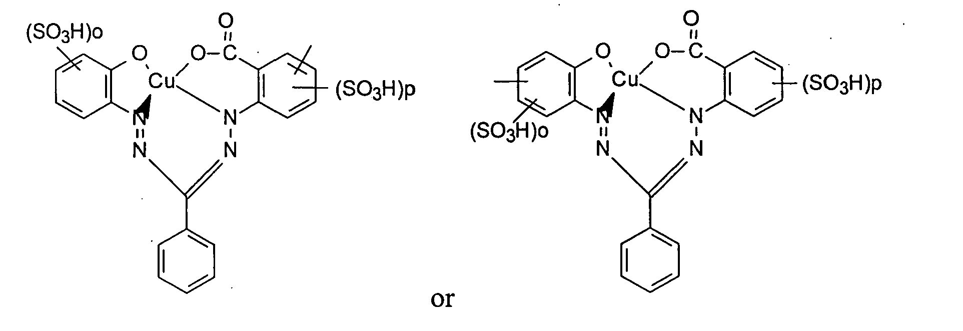 wherein o and p each independently is 0, 1, 2, or 3.

In the reactive dyestuffs according to the formula (I), D can be the monoazo radical represented by the following formulas: 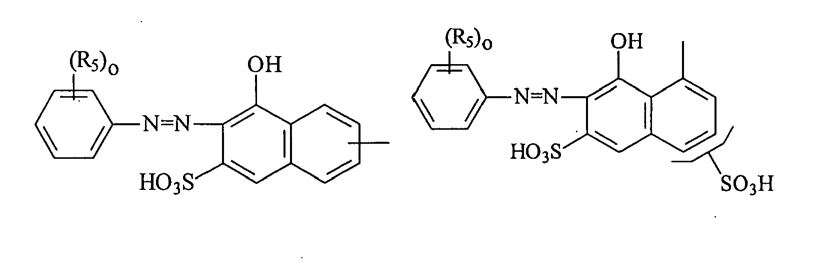 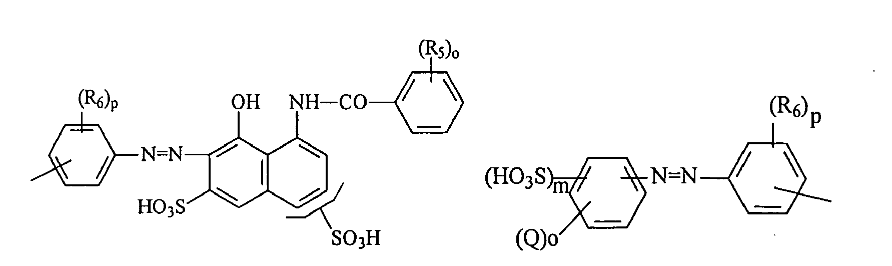 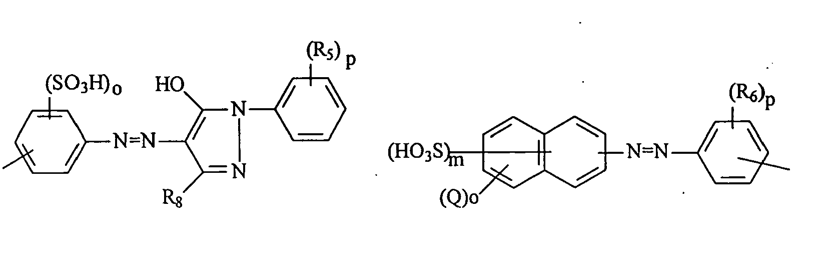 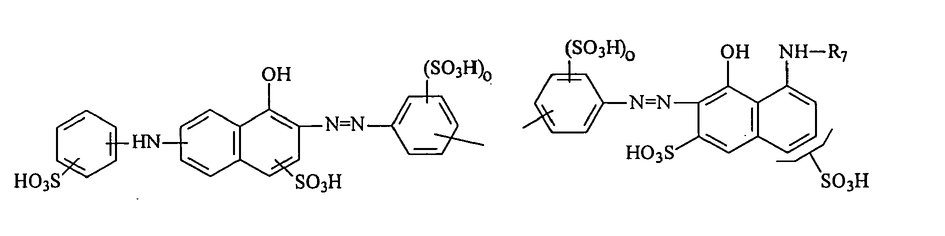 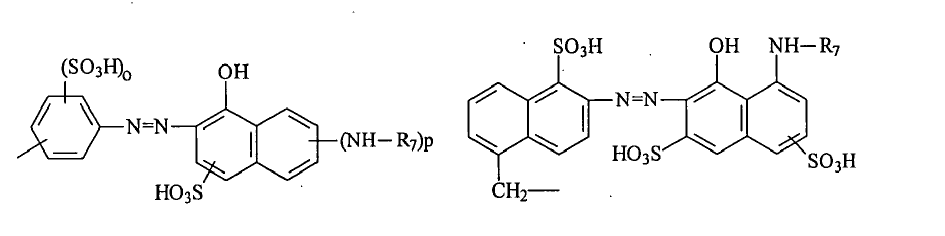 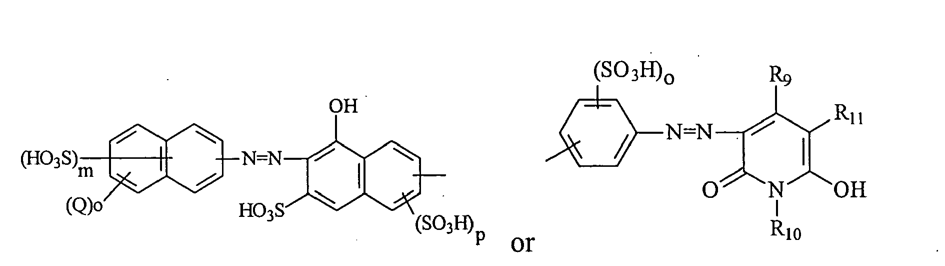
wherein R₅ is halogen, amino, C₁₋₄ alkyl, C₁₋₄ alkoxyl, carboxyl, sulfo, -SO₂CH₂CH_{Z}W, or -SO₂CH=CH₂,
R₆ is C₁₋₄ alkyl, C₁₋₄ alkoxyl, amino, acetylamino, ureido, or sulfo,
R₇ is C₁₋₄ alkylacyloxy, or benzoyl,
R₈ is C₁₋₄ alkyl, or carboxyl,
R₉ and R₁₀ each independently is C₁₋₄ alkyl,
R₁₁ is H, carbamoyl, or sulfomethyl,
m is 0, 1, 2, or 3,
W, Q, o, and p are defined the same as the above.

In the reactive dyestuffs according to the formula (I), D can be the disazo or polyazo radical represented by the following formulas: 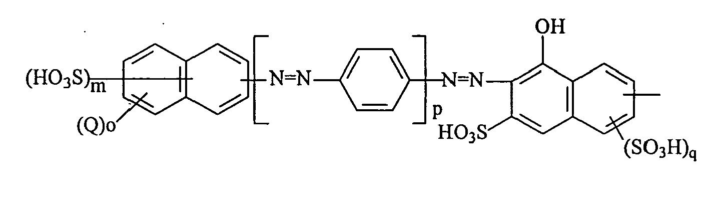 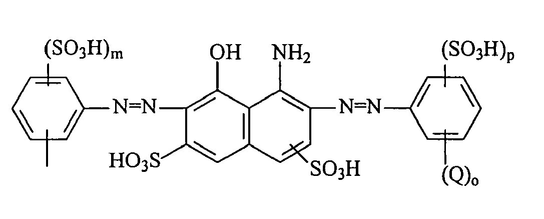 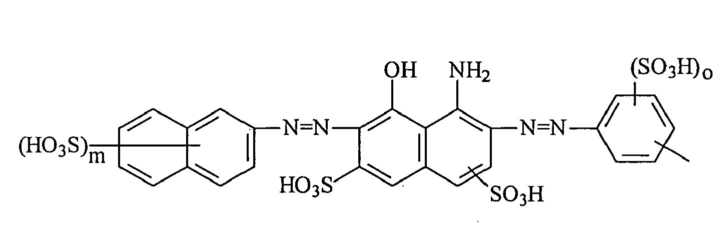 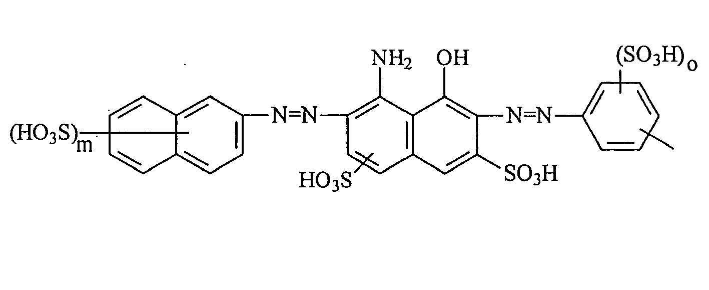 and 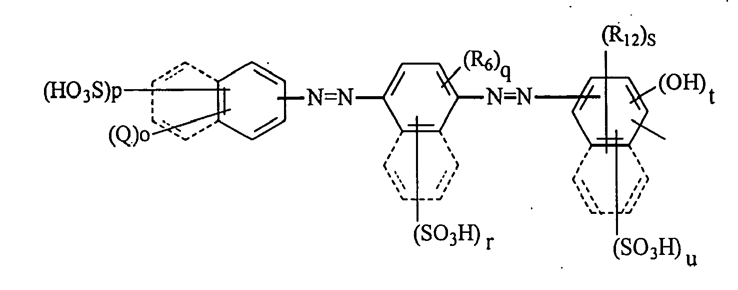
wherein R₁₂ is C₁₋₄ alkyl, C₁₋₄ alkoxyl, carboxyl, sulfo, acetyl, acetylamino, or ureido,
q, r, s, t, and u each independently is 0, 1, 2, or 3,
R₆, Q, m, o, and p are defined the same as the above.

In the reactive dyestuffs according to the formula (I), D can be the metal complex azo radical represented by the following formulas: 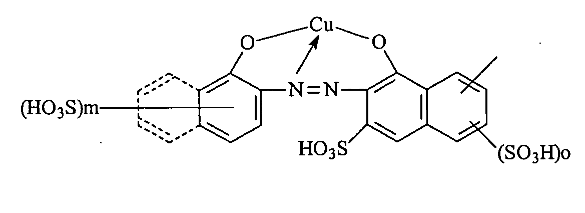 and 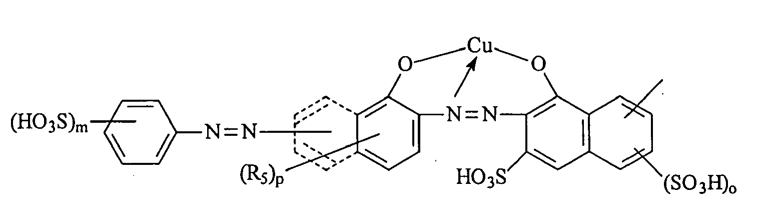 wherein R₅, p, m, and o are defined the same as the above.

In the reactive dyestuffs according to the formula (I), D can be the anthraquinone radical represented by the following formula: 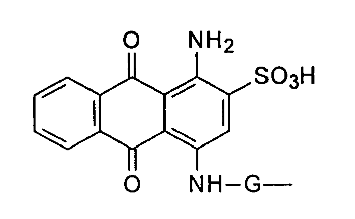 wherein G is a phenyl group substituted by C₁₋₄ alkyl and/or sulfo.

In the reactive dyestuffs according to the formula (I), D can be the triphendioxazine radical represented by the following formulas: 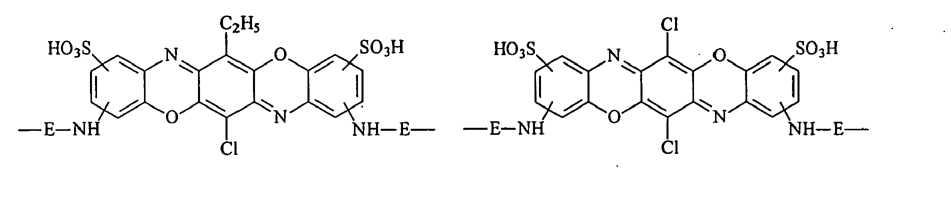 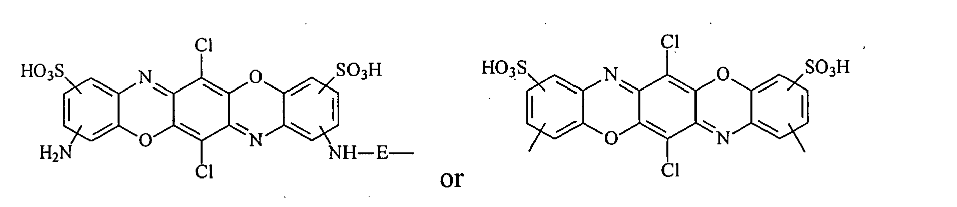 wherein E is a direct bond, a phenyl group or an ethylene group.

In the reactive dyestuffs according to the formula (I), D can be the phthalocyanine radical represented by the following formula: 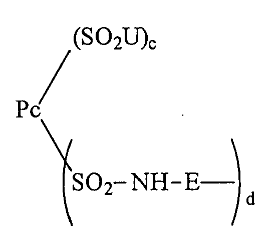 wherein
Pc is copper phthalocyanine or nickel phthalocyanine,
each of U independently is -OH or -NH₂,
E is defined the same as the above, and
c+d ≦ 4.

The reactive dyestuffs of the present invention are not limited , but are such as the exemplary embodiments represented by the following formulas (1) to (21): 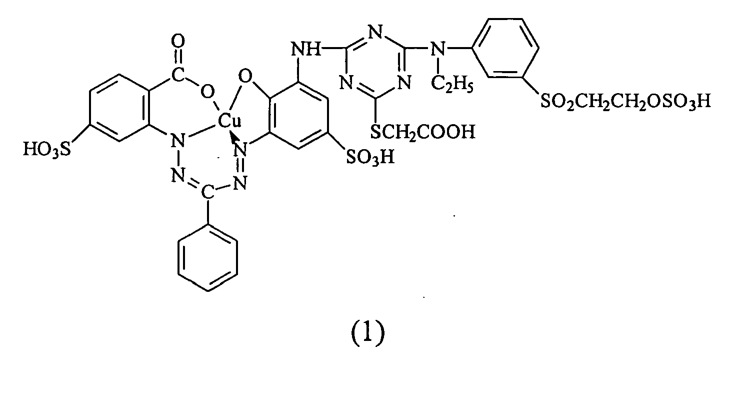 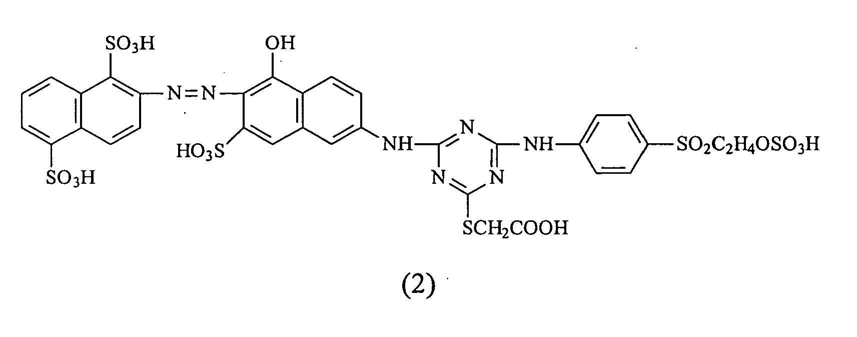 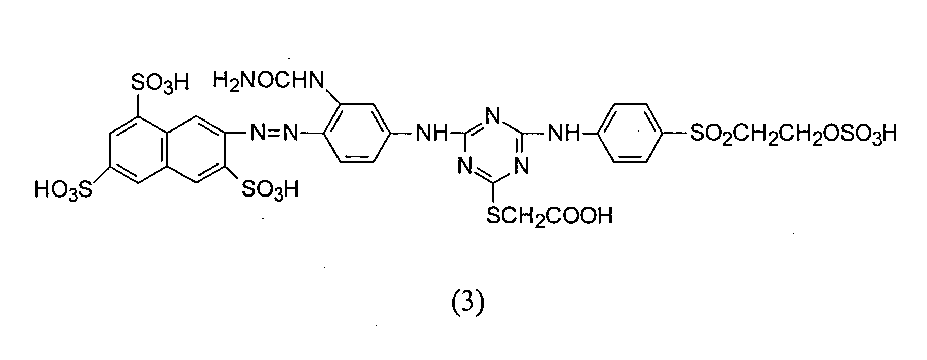 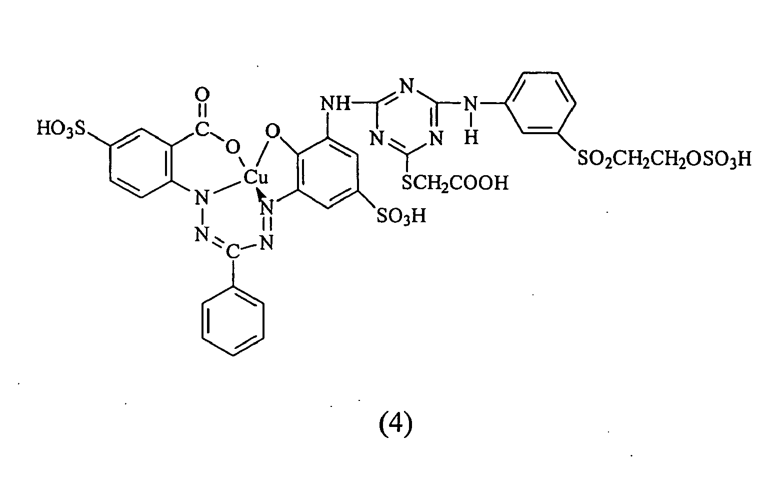 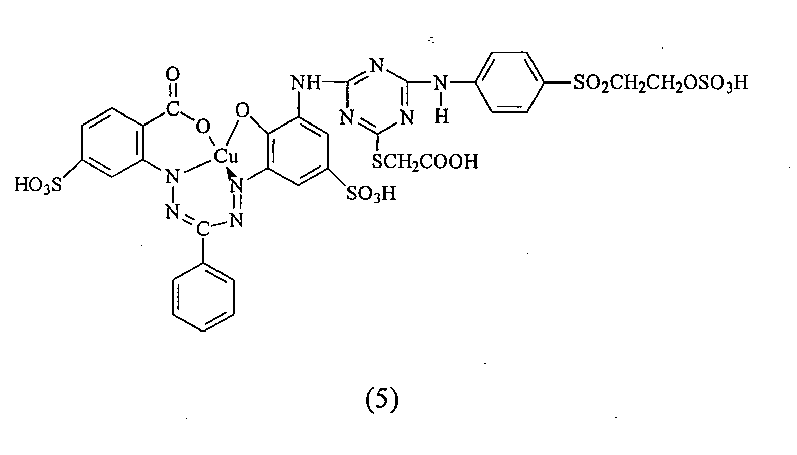 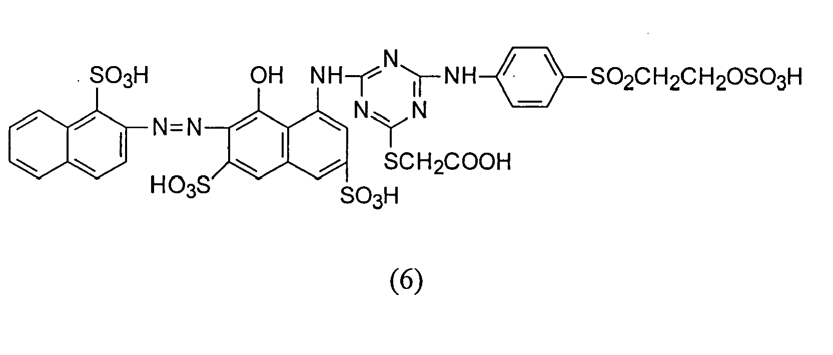 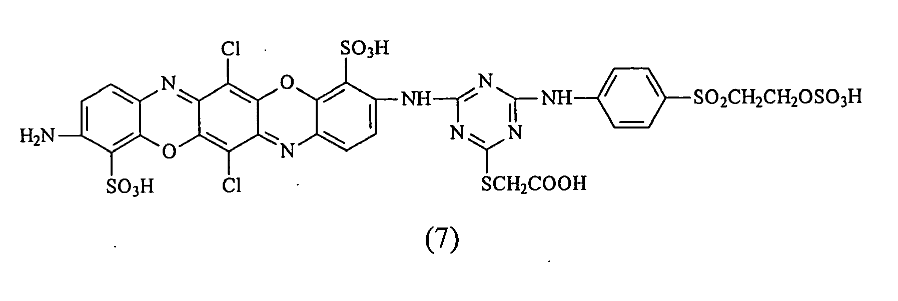 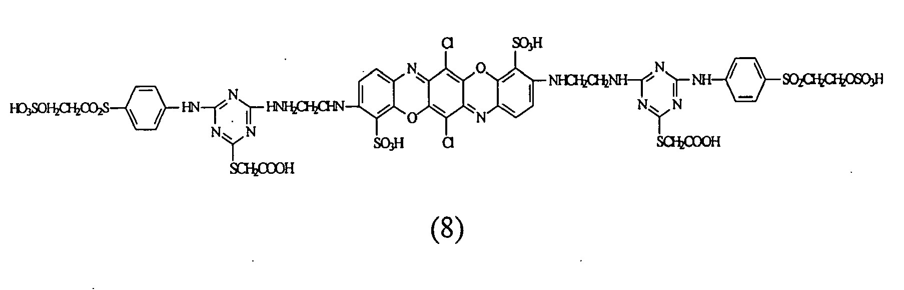 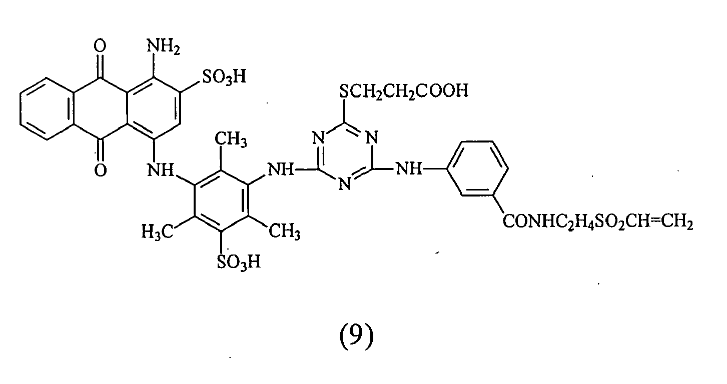 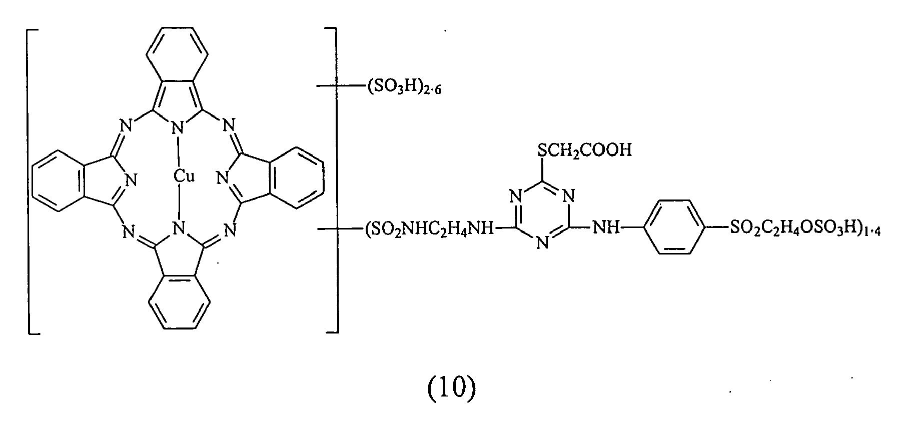 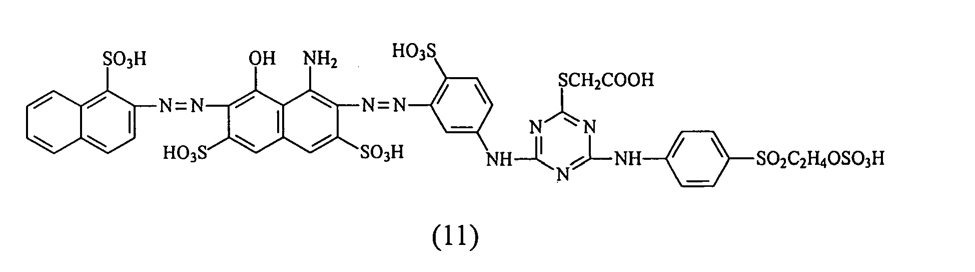 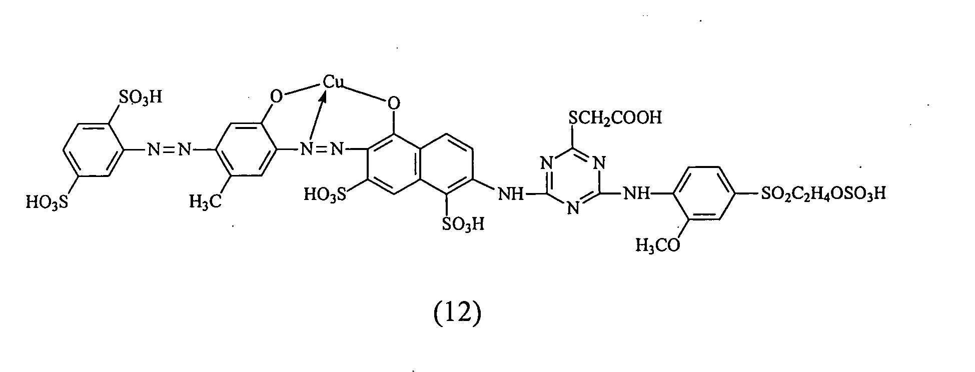 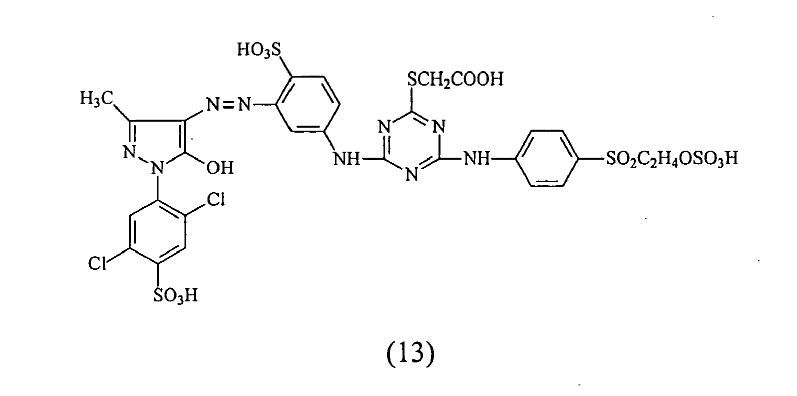 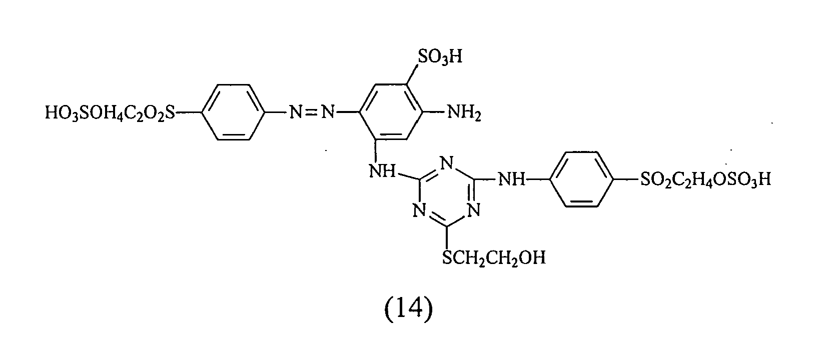 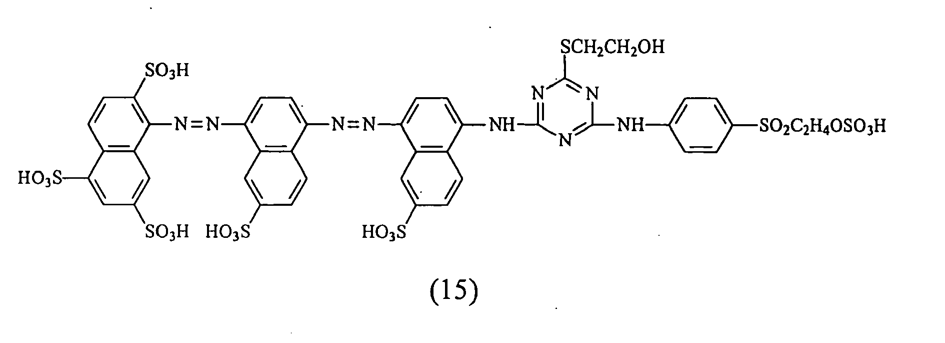 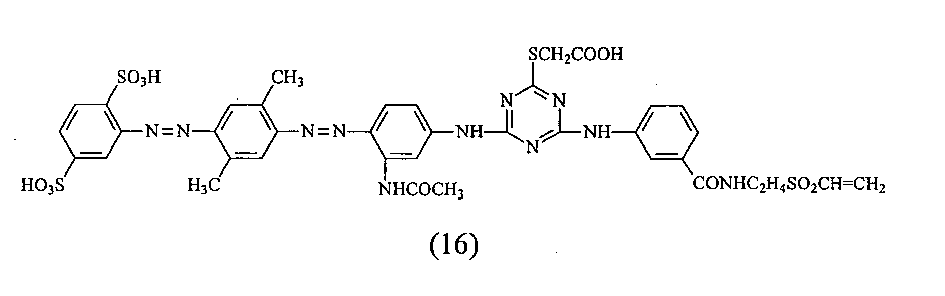 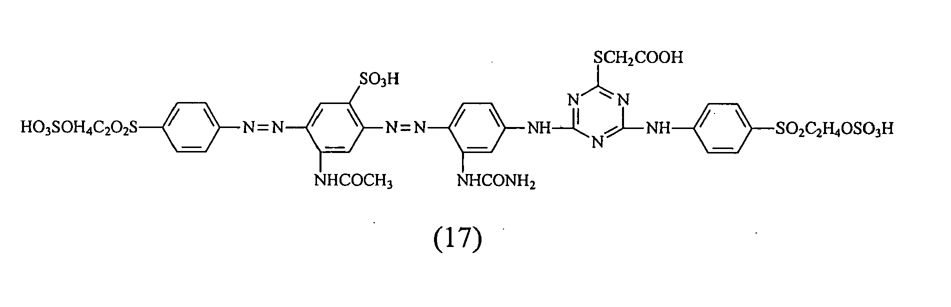 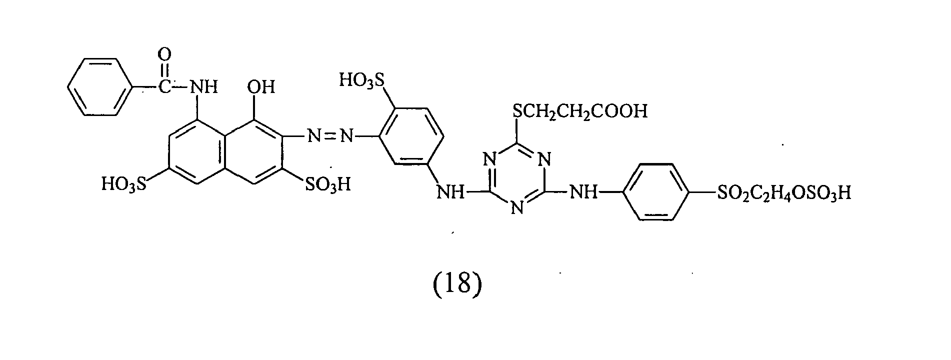 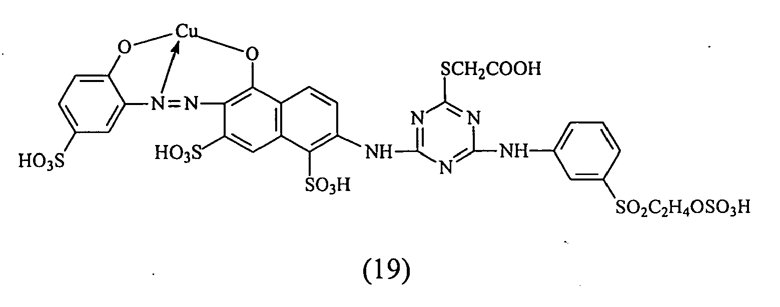 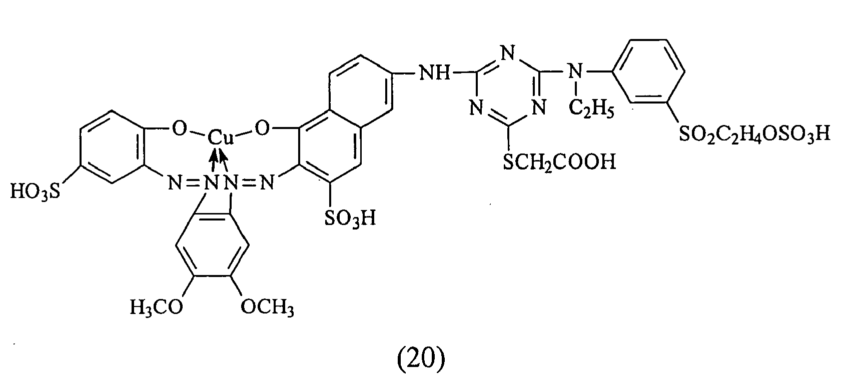 and

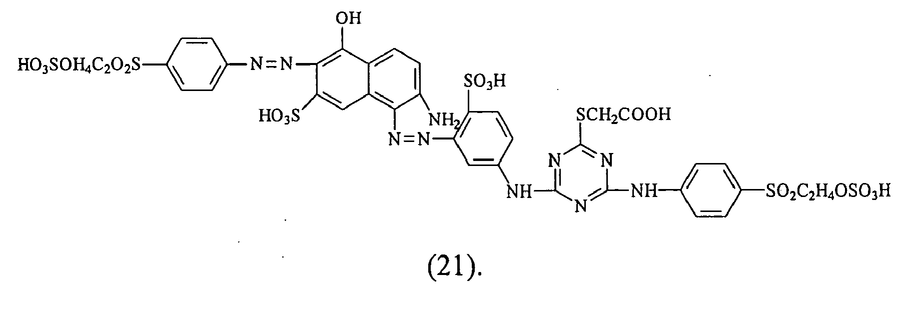

The reactive dyestuffs of the present invention can be synthesized by way of following methods, e.g. diazotization, coupling reaction, and condensation. In convenience for illustration, compounds disclosed in the specification of the present invention are represented as free acids. However, when the dyestuffs of the present invention are synthesized or utilized, they exist as water-soluble salts. The proper salts to the present invention can be alkali metal salts, alkaline-earth metal salts, ammonium salts, or organic amine salts, but are preferred to sodium salts, potassium salts, lithium salts, ammonium salts, or triethanolamine salts.

The reactive dyestuffs of the present invention (I) are suitable for dyeing and printing on large-ranged materials, and in particular to cellulose fiber materials and cellulose-containing fiber materials. These fiber materials are not limited to natural and regenerated cellulose fibers such as cotton, hessisan, flax, hemp, ramie, and viscose rayon, or cellulose-containing fiber materials. The reactive dyestuffs of formula (I) are also suitable for dyeing or printing on hydroxyl-containing fibers which are present in mixed fabrics.

The reactive dyestuffs of the present invention can be fixed on the fibers in various forms, especially in the form of water-soluble dyestuff solution or printing paste. The dyestuffs can be applied in the fiber materials, and be fixed on the fibers by various methods, e.g. continuous-dyeing, cold-pad-batch dyeing and printing dyeing, but preferably through continuous-dyeing and cold-pad-batch dyeing.

Dyeing or printing can be performed by any conventional method. In the cold-pad-batch dyeing method, the material is padded by using the inorganic salts (e.g. anhydrous sodium sulfate and sodium chloride) and acid-binding agents (e.g. sodium carbonate, and sodium hydroxide). The padded fabric is rolled and stored at room temperature to allow dye fixation to take place.

In the continuous dyeing method, the material is padded according to the conventional method in the mixture of acid-binding agents (e.g. sodium carbonate or sodium bicarbonate) and the pad liquid. The resultant material is then dried and color fixed by baking or steaming. In the two-bath pad dyeing method, the material is padded with a dyestuff liquid and then dealt by an inorganic neutral salt (e.g., sodium sulfate or sodium silicate). The dealt material is preferably dried and color fixed by baking or steaming.

In the textile printing method, such as single printing method, the material is printed by a printing slurry containing the acid-binding agent (e.g., sodium bicarbonate) and is dried and color fixed by baking or steaming. In the two-phase printing method, the material is dipped in a solution containing inorganic neutral salt (e.g., sodium chloride) and acid-binding agent (e.g., sodium hydroxide or sodium carbonate) in a high temperature of 90°C or above to fix the color. The dyeing or printing methods employed in the process of the present invention are not limited to the above methods.

The dyestuff of the present invention is a valuable reactive dyestuff for cellulose fibers in the present dyeing industry. The dyestuff has properties of excellent fixing ability, outstanding build up and good wash-off. The dyestuff of the present invention is also suitable for printing, particularly when applying in printing cotton or blended fabrics that contain wool or silk. In the dyeing or printing of cellulose fiber materials, dyed products with various fine dyeing properties are obtained; particularly dyeing, printing or batch-up dyeing products with high quality can be obtained in respect of build-up and wash fastness.

### BRIEF DESCRIPTION OF THE DRAWINGS

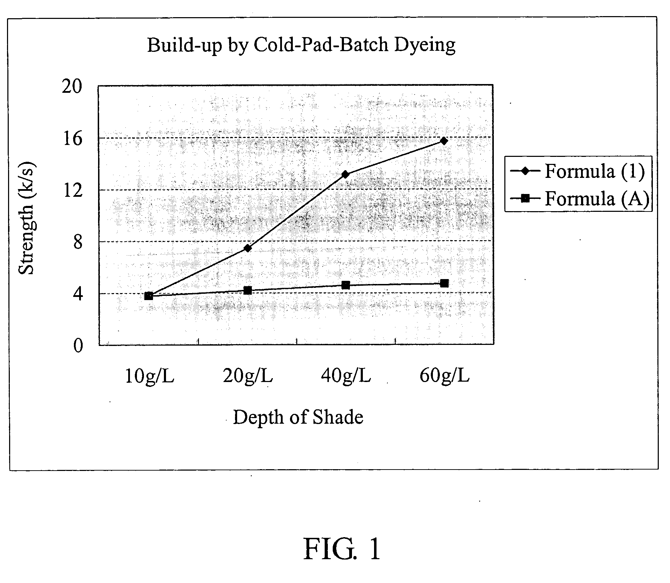

FIG. 1 illustrates build-up property between the reactive dyestuffs respectively represented by formula (1) and formula (A).

### DETAILED DESCRIPTION OF THE PREFERRED EMBODIMENT

In convenience for illustration, the following examples are exemplified for a more concrete description, and have been used to illustrate the present invention. The examples sited below should not be taken as a limit to the scope of the invention. In these examples, the compounds are represented in the form of free acid. However, in practice, they will exist possibly as metallic salts, more possibly as alkali metallic salts, especially sodium salts. Unless otherwise stated in the following examples, quantity is given as parts or percentages (%) by weight, and temperatures are employed as unit of °C.

### Example 1

(a) 28 parts of cyanuric chloride are added in 150 parts of water at 0 °C, and then 90 parts of Cuprate(3-),[2-[[[[3-amino-2-(hydroxy-O)-5-sulfophenyl]azo-N2]phenylmethyl]azo-N1]-4-sulfobenzoato(5-)-O]-(Formazan base)) are also added therein. The pH value of the reaction solution is adjusted to 5-5.5 by Na₂CO₃. Blue solution is afforded by reaction for 2 hours under 10~15°C*.*
(b) 21 parts of thioglycolic acid are added in the reaction solution of the step (a). At the temperature between 20 °C and 25 °C, the pH value of the reaction solution is adjusted to 7∼8 by Na₂C0₃ powders. After reaction for 2 hours, the dye base is obtained by salting-out methods. 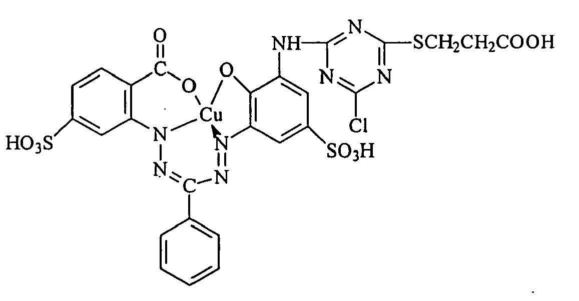
(c) The dye base of the step (b) are dissolved in 100 parts of water. 5 parts of N-ethylaminophenyl-3-(beta-sulfatoethylsulfone) are added into the above solution. The pH value of the solution is adjusted to 4∼6 by sodium acetate. After reaction is completed under 80∼85 °C, blue product of the following formula (1) is obtained by salting-out methods.

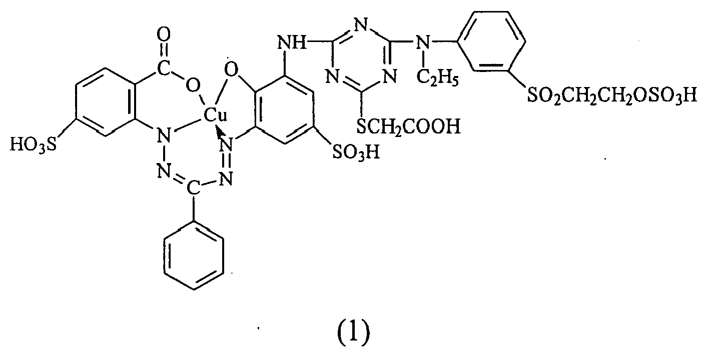

### Example 2

(a) 10 parts of cyanuric chloride are added in 70 parts of water at 0°C, and then a solution containing 12 parts of 2-amino-5-hydroxynaphthalene-7-sulfonic acid are added therein. The pH value of the solution is adjusted to 1∼3 by 15% Na₂CO₃ aqueous solution: After reaction for 2 hours under 5°C, the solution is afforded by filtration.
(b) 15 parts of 2-aminonaphthalene-1,5-disulphonic acid and 14 parts of 32% HCl aqueous solution are added into 80 parts of water at 0°C. After the solution is stirred entirely, 4 parts of NaNO₂ aqueous solution are added therein. Under 0∼5 °C, diazotization is performed for about 0.5 hour. Then, the solution is added into the above filtrated solution of the step (a). The pH value of the solution is adjusted slowly to 6∼8 by Na₂CO₃. After the reaction is carried out for 3 hours, orange solution is obtained.
(c) 5 parts of thioglycolic acid are added into the solution of the step (b). The pH value of the solution is adjusted to 7∼9 by Na₂CO₃ powders under 20~35 °C. After reaction completely, orange dye base is obtained by salting-out.
(d) The dye base of the step (c) is dissolved in 120 parts of water, and then 28 parts of aminophenyl-4-(β-sulfatoethylsulfone) are added therein. The pH value of the solution is adjusted to 4∼6 by sodium acetate. Orange products of the following formula (2) are afforded by reaction over night under 80∼90 °C.

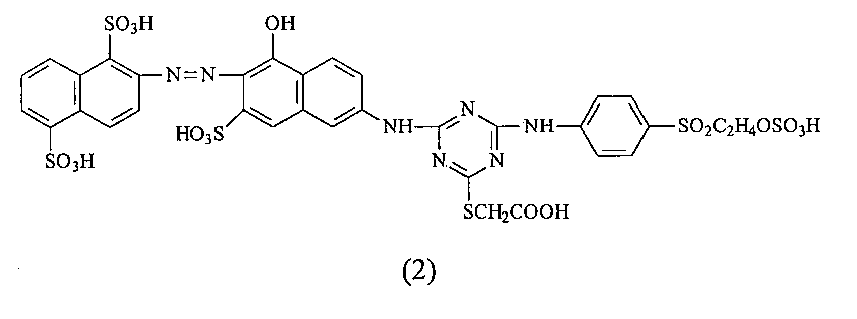

### Example 3

(a) 8 parts of m-aminophenyl urea are dissolved in 50 parts of water by addition of Na₂CO₃.
(b) 19 parts of 7-aminonaphthalene-1,3,6-trisulphonic acid are dissolved in 70 parts of water at 0 °C by addition of Na₂CO₃. Subsequently, 4 parts of NaNO₂ are added into the solution, followed by doping 13 parts of 32% HCl aqueous solution. Then, the solution are stirred entirely to carry out diazotization for about 0.5 hour under 5~10 °C, then, added into the above solution of the step (a), the pH value of the solution is adjusted to 5∼6 by 15% Na₂CO₃ aqueous solution. Yellow solution is obtained for 0.5 hour.
(c) 10 parts of cyanuric chloride are dispersed in 150 parts of water at 0 °C, and then poured into the solution of the step (b). The pH value of the solution is adjusted to 5∼6 by 15% Na₂CO₃ aqueous solution. After the reaction is performed completely, yellow solution is obtained.
(d) 5 parts of thioglycolic acid are added in the yellow solution of the step (c). The pH value of the reaction solution is adjusted to 7∼9 under 20∼35 °C by Na₂CO₃ powders. Yellow solution is afforded by complete reaction.
(e) 28 parts of aminophenyl-4-(β-sulfatoethylsulfone) are added into the solution of the step (d). The pH value of the solution is adjusted to 4∼6 by sodium acetate. Yellow products of the following formula (3) are obtained by reaction over night under 80∼90 °C.

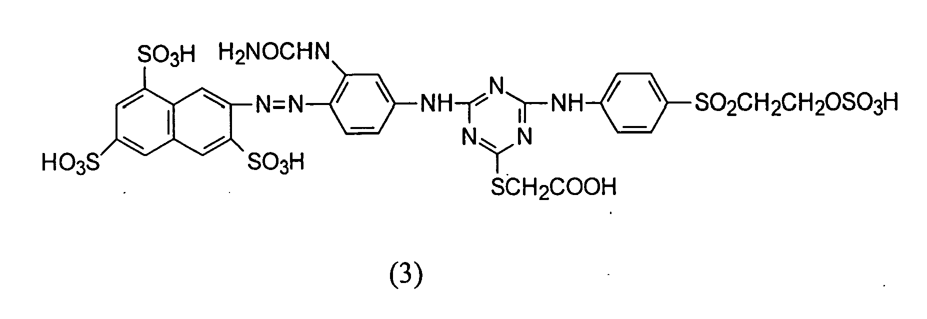

### Example 4~17

In accordance with synthetic methods of Example 1~3, the reactive dyestuffs of Example 4~21 are obtained as follows. (Color Appearance in Table 1 means colors of the reactive dyestuffs dissolved in aqueous solution)

**Table 1**

| Example | Formulas of The Reactive Dyestuffs | Color Appearance |
|---|---|---|
| 4 | 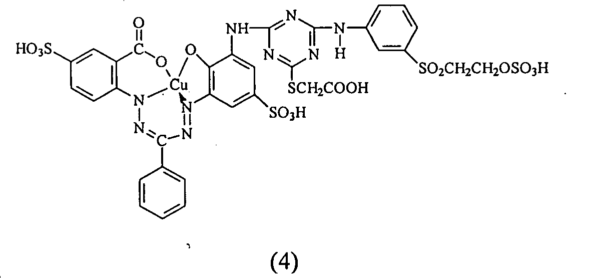 | Blue |
| 5 | 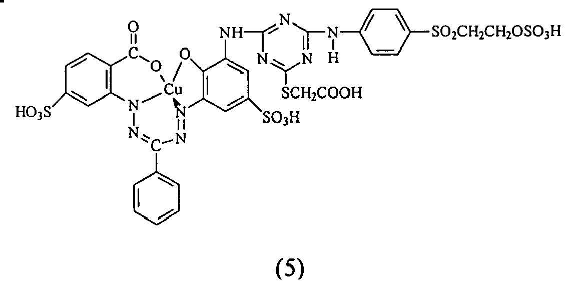 | Blue |
| 6 | 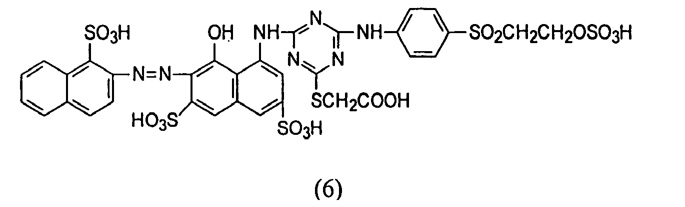 | Red |
| 7 | 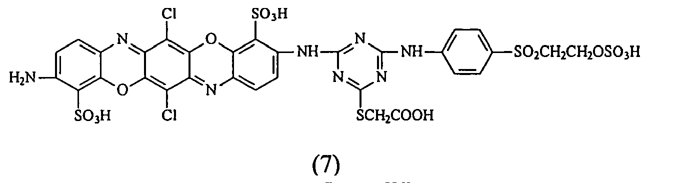 | Blue |
| 8 | 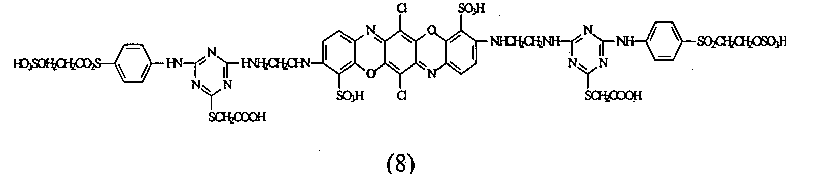 | Blue |
| 9 | 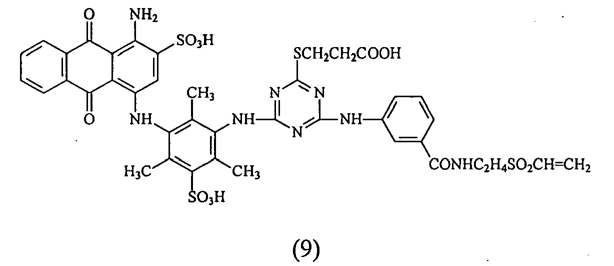 | Blue |
| 10 | 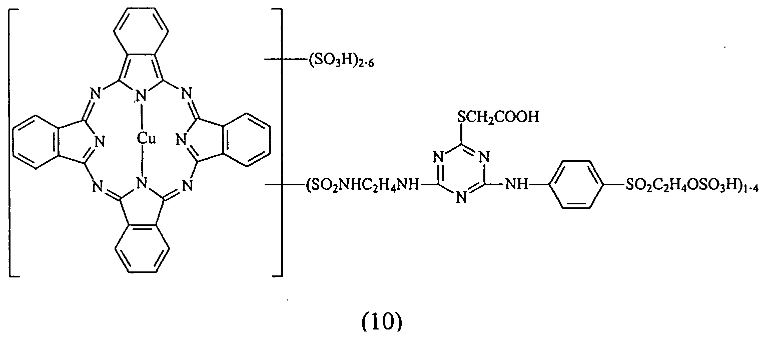 | Blue |
| 11 | 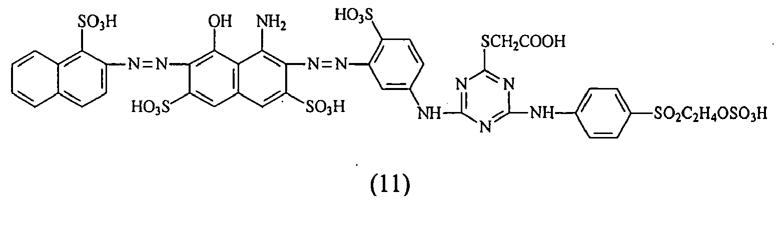 | Navy |
| 12 | 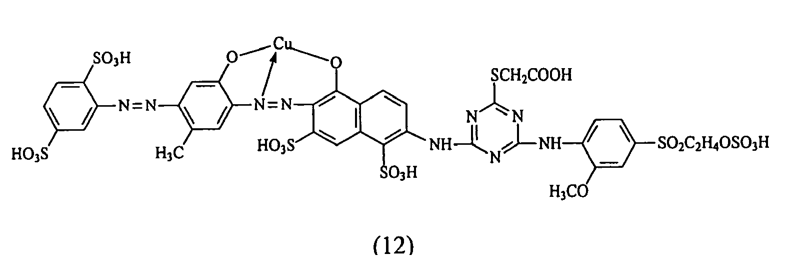 | Blue |
| 13 | 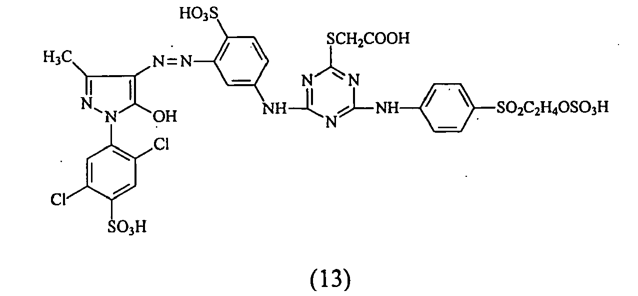 | Bright yellow |
| 14 | 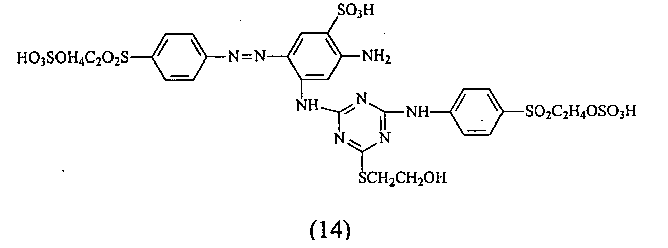 | Yellow |
| 15 | 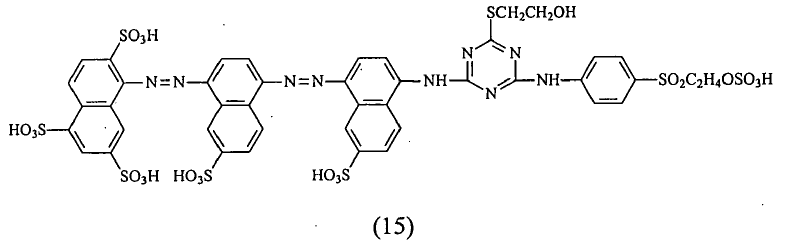 | Brown |
| 16 | 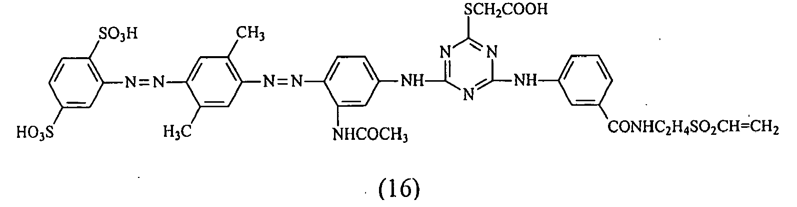 | Amber |
| 17 | 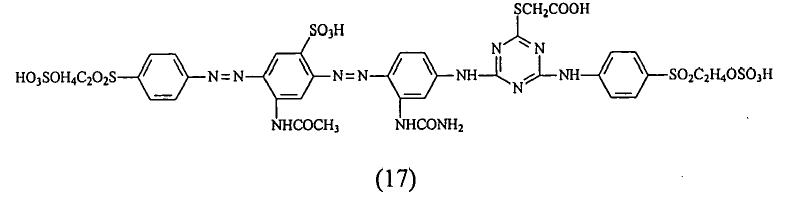 | Orange |
| 18 | 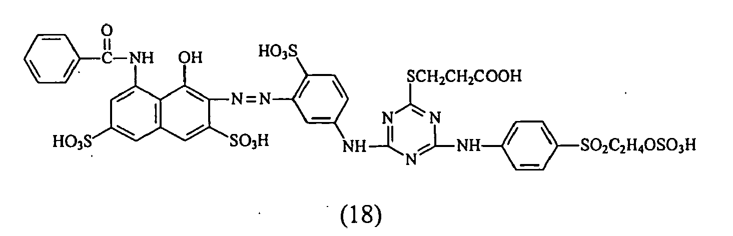 | Red |
| 19 | 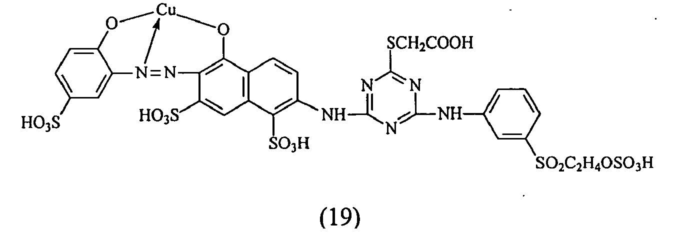 | Rubine |
| 20 | 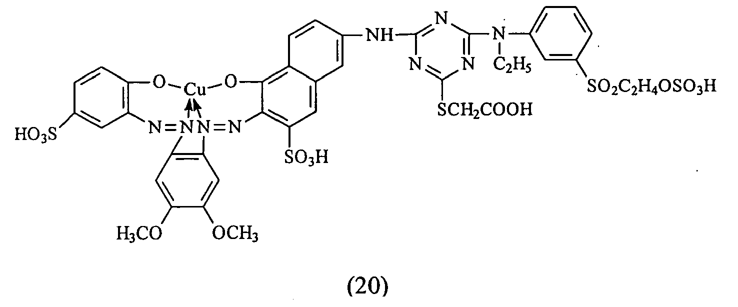 | Oliver |
| 21 | 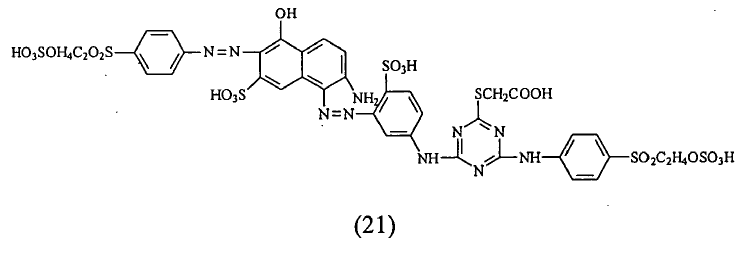 | Red |

### Testing Example 1

3 parts of the dyestuffs prepared from Example 1 are dissolved in 100 ml water to obtain a 30 parts/L padding liquor. Then, 25 ml alkaline agent (15 ml/L NaOH and 30 parts/L sodium silicate) is added into the padding liquor, and then stirred until well mixed. The resultant solution is poured into a pad roller device. The cotton fabric is padded through the pad roller device, and rolled up to form shaft-like. The shaft-like cotton fabric is stored at room temperature for 4 hours. Then, the obtained blue fabric is washed in sequence with cool water, boiled water for 10 minutes, boiled non-ionic detergent for 10 minutes, and finally with cool water again. After the cotton fabric is dried, the deep blue fabric having characteristics of excellent build-up is obtained.

### Testing Example 2

3 parts of the dyestuffs prepared from Example 2 are dissolved in 100 mL water to obtain a 30 parts/L padding liquor. Then, 25 ml alkaline agent (15 ml/L NaOH and 30 parts/L sodium silicate) is added into the padding liquor, and then stirred until well mixed. The resultant solution is poured into a pad roller device. The cotton fabric is padded through the pad roller device, and rolled up to form shaft-like. The shaft-like cotton fabric is stored at room temperature for 4 hours. Then, the obtained yellow fabric is washed in sequence with cool water, boiled water for 10 minutes, boiled non-ionic detergent for 10 minutes, and finally with cool water again. After the cotton fabric is dried, the deep yellow fabric having characteristics of excellent build-up is obtained.

### Testing Example 3

100 parts of urea, 10 parts of sodium m-nitrobenzene sulfonate, 20 parts of sodium bicarbonate, 55 parts of sodium alginate, and 815 parts of water (1000 parts in total) are mixed and stirred to obtain auxiliary paste.

3 parts of the dyestuffs prepared from Example 3 are sprayed into 100 parts above-mentioned auxiliary paste, and stirred rapidly to make a colored paste. A 100-meshes and 45°-twilled printing screen covers twill-mercerized cotton fabric in proper size. Subsequently, the colored paste is put on and then scraped against the printing screen.

The printed twill-mercerized cotton fabric is dried in an oven at 65 °C for 5 minutes. The dried fabric is placed into a steaming oven with constant pressure and saturated steam of 102~105 °C for 10 minutes.

The obtained yellow fabric is washed in sequent with cool water, boiled water for 10 minutes, boiled non-ionic detergent for 10 minutes, and finally with cool water again. After the cotton fabric is dried, the deep yellow fabric having characteristics of excellent build-up is obtained.

### Tests of Alkali-resistant Solubility and Build-up by Cold-pad-batch Dyeing

First, the dyestuffs of the formula (A) and the formula (1), taken with proper amounts in accordance to a preliminary test, are respectively dissolved in water. The alkali solution including 100 g/L 50°Be' Na₂SiO₂ and 30 ml/L 38°Be' NaOH is added therein, respectively. The mixture samples respectively are filtered through the No. 1 filter paper of Toyo Rosh Kaisha, Ltd. in order to estimate how many solids are residual and then to determine the alkali-resistant solubility. The test results are illustrated as shown in Table 2.

**Table 2**

| Alkali-resistant Solubility | |
|---|---|
| Na₂SiO₂ 50°Be'=100 g/L, NaOH 38°Be'=30 ml/L | |
| formula (A) | less 10g/L |
| formula (1) | over 70g/L |

The alkali-resistant solubility of formula (1) is much higher than that of formula (A). Additionally, the build-up of the fabrics versus the applied dyestuffs is constructed and compared. The formula (1) shows outstanding fixation level, and the non-fixed dyestuff of the formula (1) is easily washed off. It means that the formula (1) has good build-up in cold-pad-batch dyeing.

From the foregoing description, the technology according to the present invention achieves the objects of the invention and conforms to the patent requirements of novelty, inventive step and industrial applicability. Although the present invention has been explained in relation to its preferred embodiment, it is to be understood that many other possible modifications and variations can be made without departing from the scope of the invention as hereinafter claimed.

## Claims

1. A reactive dyestuff with an alkylthio group and a β-sulfatoethylsulfone group represented by the following formula (I): 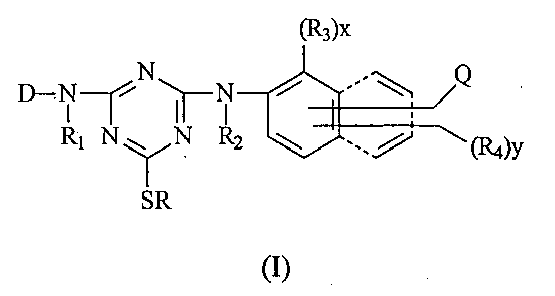 wherein
D is a chromophoric radical having one or more sulfo groups;
R is C₁₋₄ alkyl, which is non-substituted or substituted by one or more substituents, said substituents are selected from the group consisting of hydroxyl, sulfo, cyano, amino, carbonamido, carboxyl, alkoxycarbonyl, acyloxy, and alkoxy;
R₁ and R₂ each independently is hydrogen, or C₁₋₄ alkyl, which is non-substituted or substituted by one or more substituents, said substituents are selected from the group consisting of hydroxyl, cyano, C₁₋₄ alkoxy, C₁₋₄ alkoxycarbonyl, carboxyl, and sulfo;
R₃ and R₄ each independently is hydrogen, sulfo, C₁₋₄ alkyl, or C₁₋₄ alkoxy;
Q is -B-SO₂CH₂CH₂W, -B-SO₂CH=CH₂, -SO₂CH₂CH₂W, or -SO₂CH=CH₂;
B is -CONH-(CH₂)ᵢ-, or -O-(CH₂)ⱼ-CONH-(CH₂)ₖ-;
i, j, and k each independently is 1, 2, 3, 4, 5, or 6;
W is -Cl, -OSO₃H, 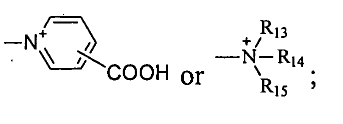
R₁₃, R₁₄, and R₁₅ each independently is C₁₋₄ alkyl; and
x and y each independently is 0 or 1.

2. The reactive dyestuffs of claim 1, wherein R is methyl or ethyl substituted by one to three substituents selected from the group consisting of halogens, hydroxyl, sulfo, cyano, amino, carbonamido, carboxyl, alkoxycarbonyl, acyloxy, and alkoxy.

3. The reactive dyestuffs of claim 1, wherein R₁ and R₂ each independently is methyl or ethyl substituted by one to three substituents selected from the group consisting of halogens, hydroxyl, cyano, C₁₋₄ alkoxy, C₁₋₄ alkoxycarbonyl, carboxyl, and sulfo.

4. The reactive dyestuffs of claim 1, wherein the chromophoric radical D is selected from the group consisting of formazan, monoazo, disazo, polyazo, metal complex azo, anthraquinone, triphendioxazine, and phthalocyanine.

5. The reactive dyestuffs of claim 4, wherein the formazan radical is selected from the group consisting of the following formulas: 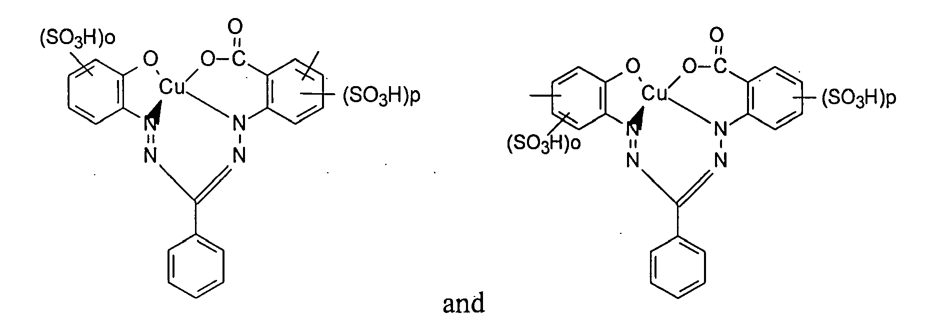 wherein o and p independently stand for the integer 0, 1, 2, or 3.

6. The reactive dyestuffs of claim 4, wherein the monoazo radical is selected from the group consisting of the following formulas: 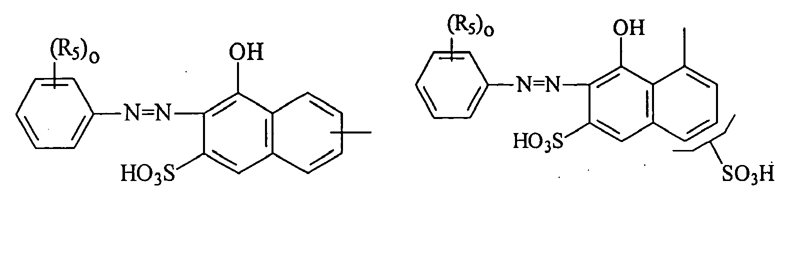 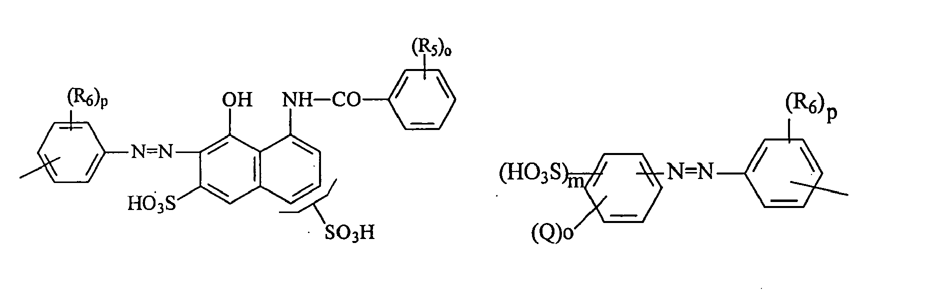 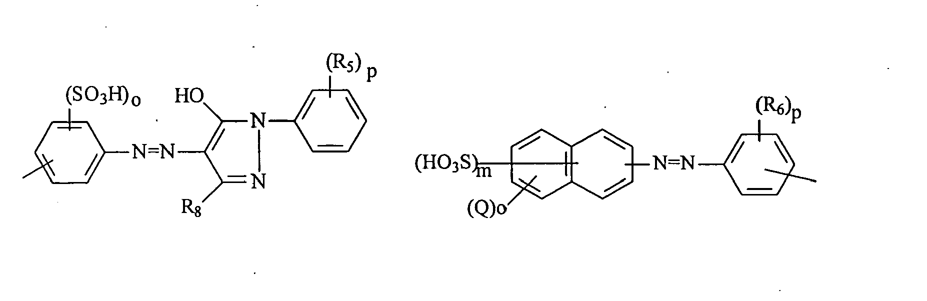 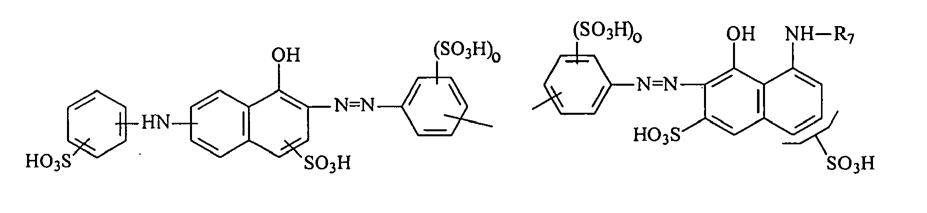 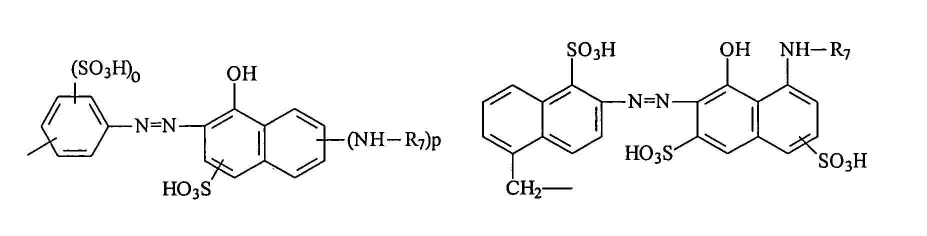 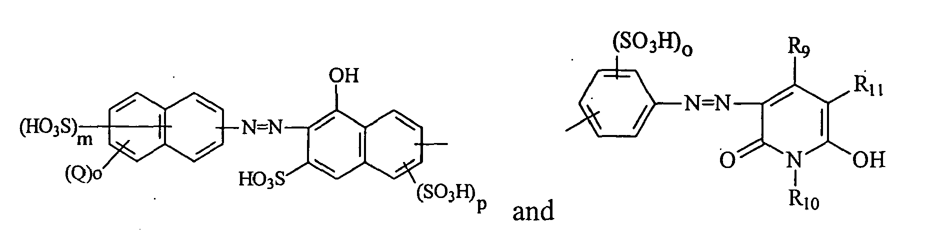 wherein,
R₅ is halogen, amino, C₁₋₄ alkyl, C₁₋₄ alkoxyl, carboxyl, sulfo, -SO₂CH₂CH₂W, or -SO₂CH=CH₂, and W is defined the same as claim 1;
R₆ is C₁₋₄ alkyl, C₁₋₄ alkoxyl, amino, acetylamino, ureido, or sulfo;
R₇ is C₁₋₄ alkylacyloxy, or benzoyl;
R₈ is C₁₋₄ alkyl, or carboxyl;
R₉ and R₁₀ each independently is C₁₋₄ alkyl;
R₁₁ is H, carbamoyl, or sulfomethyl;
m is 0, 1, 2, or 3;
Q is defined the same as claim 1; and
o and p are defined the same as claim 5.

7. The reactive dyestuffs of claim 4, wherein the disazo and polyazo radicals are selected from the group consisting of the following formulas: 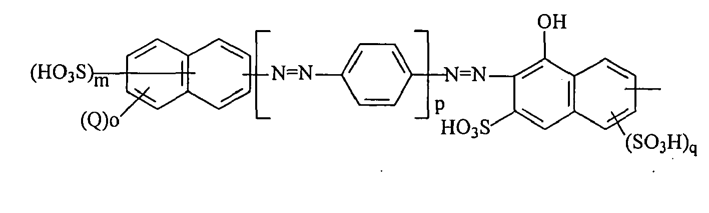 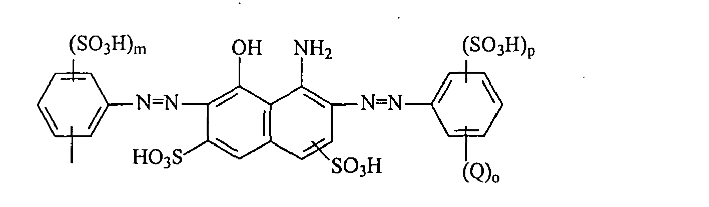 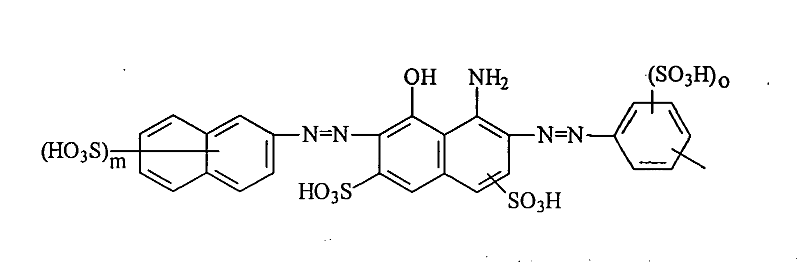 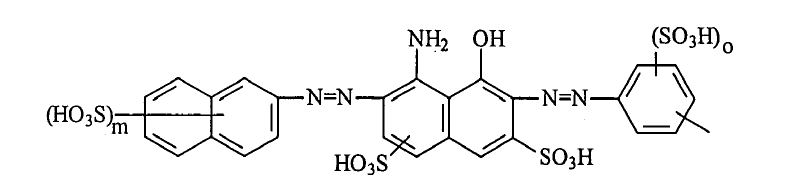 and 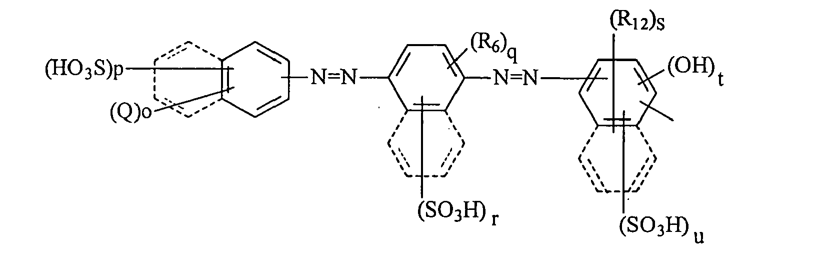 wherein
R₁₂ is C₁₋₄ alkyl, C₁₋₄ alkoxyl, carboxyl, sulfo, acetyl, acetylamino, ureido;
q, r, s, t, and u each independently is 0, 1, 2, or 3;
R₆, and m are defined the same as claim 6;
Q is defined the same as claim 1; and
o and p are defined the same as claim 5.

8. The reactive dyestuffs of claim 4, wherein the metal complex azo radical is selected from the group consisting of the following formulas: 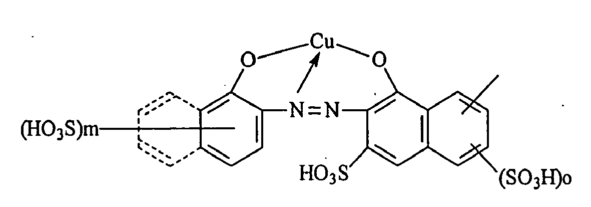 and 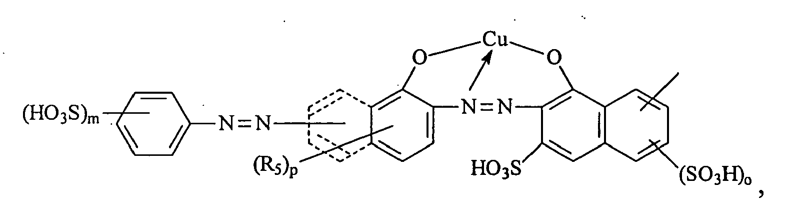 wherein,
R₅ and m are defined the same as claim 6; and
o and p are defined the same as claim 5.

9. The reactive dyestuffs of claim 4, wherein the anthraquinone radical is the following formula: 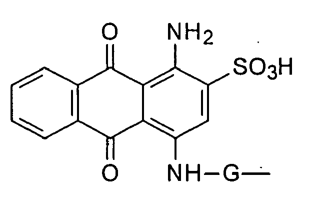 wherein G is a phenyl group substituted by C₁₋₄ alkyl and/or sulfo.

10. The reactive dyestuffs of claim 4, wherein the triphendioxazine radical is selected from the group consisting of the following formulas: 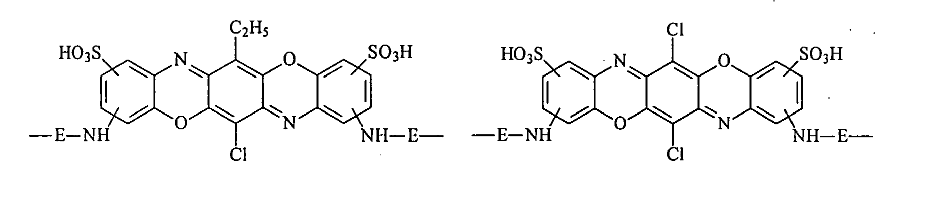 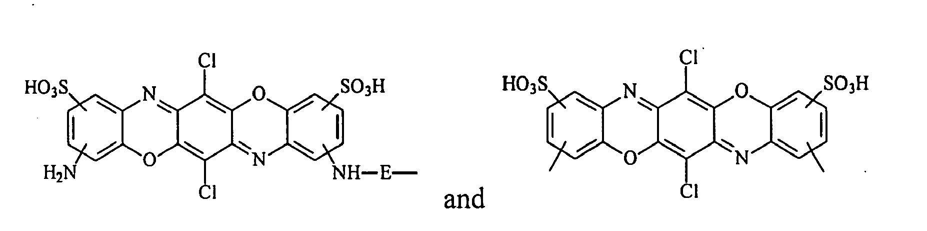 wherein E is a direct bond, a phenyl group, or an ethylene group.

11. The reactive dyestuffs of claim 4, wherein the phthalocyanine radical is the following formula: 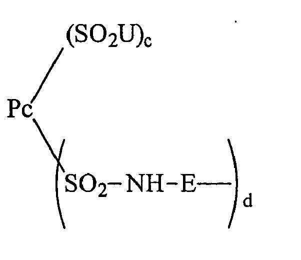 wherein,
Pc is copper phthalocyanine or nickel phthalocyanine;
each of U independently is -OH or -NH₂;
E is defined the same as claim 10; and
c+d≦ 4.

12. The reactive dyestuffs of claim 5, wherein the reactive dyestuff of the formula (I) is the following formula (1).

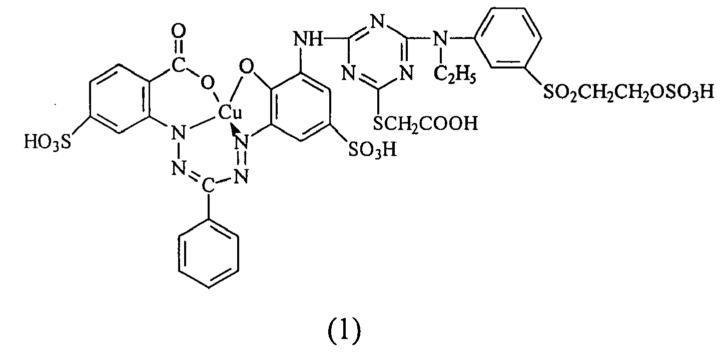

13. The reactive dyestuffs of claim 6, wherein the reactive dyestuff of the formula (I) is the following formula (2).

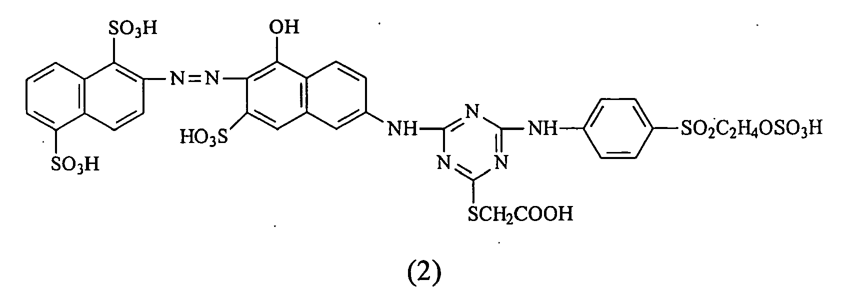

14. The reactive dyestuffs of claim 6, wherein the reactive dyestuff of the formula (I) is the following formula (3).

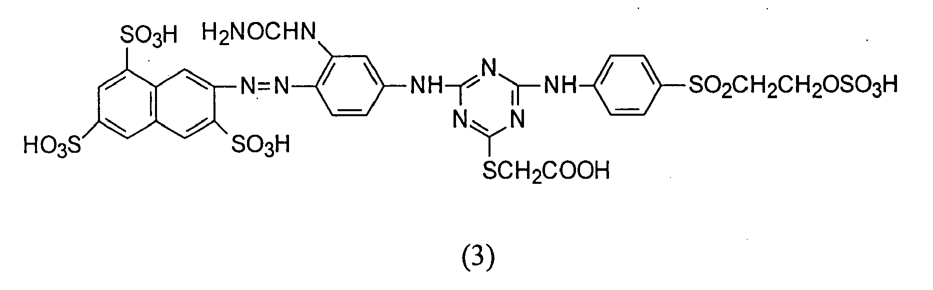

15. The reactive dyestuffs of claim 5, wherein the reactive dyestuff of the formula (I) is the following formula (4).

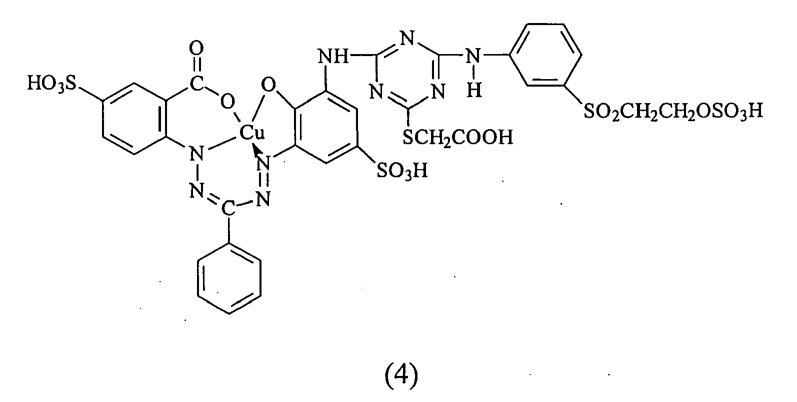

16. The reactive dyestuffs of claim 6, wherein the reactive dyestuff of the formula (I) is the following formula (6).

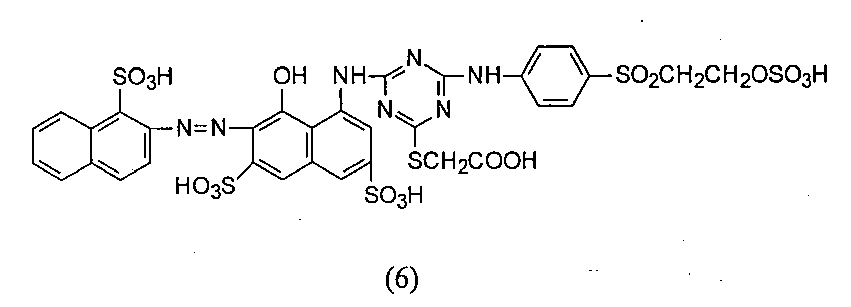

17. The reactive dyestuffs of claim 10, wherein the reactive dyestuff of the formula (I) is the following formula (7).

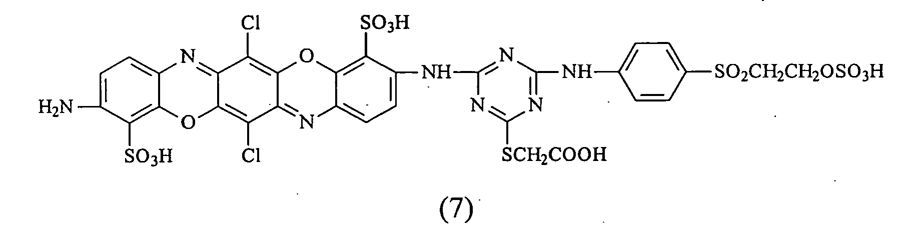

18. The reactive dyestuffs of claim 10, wherein the reactive dyestuff of the formula (I) is the following formula (8).
